# NEUE EUROPÄISCHE PATENTSCHRIFT

(11) **EP 0 205 990 B2**
(45) Veröffentlichungstag und Bekanntmachung des Hinweises auf die Entscheidung über den Einspruch: **02.04.1997**
(45) Hinweis auf die Patenterteilung: 06.03.1991
(21) Anmeldenummer: 86107389.8
(22) Anmeldetag: 30.05.1986
(51) Int. Cl.: A01B 23/04, A01B 35/22, A01B 49/02

(54) **Ackerstriegel**
Ground curry implement
Etrille agricole

(30) Priorität: 19.06.1985 DE 3521785
(43) Veröffentlichungstag der Anmeldung: 30.12.1986
(73) Patentinhaber: Rabewerk GmbH + Co., 49152 Bad Essen (DE)
(72) Erfinder: Bohnenkamp, Wilfried, Dipl.-Ing., D-4515 Bad Essen 1 (DE)
(74) Vertreter: Missling, Arne, Dipl.-Ing.

(56) Entgegenhaltungen:
- AT-B- 251 329
- DE-A- 2 850 847
- DE-C- 1 008 945
- DE-U- 1 876 282
- DE-U- 1 946 911
- DE-U- 8 001 795
- FR-A- 2 248 770
- GB-A- 809 155
- GB-A- 1 023 851
- GB-A- 1 558 011
- GB-A- 2 067 061
- GB-A- 2 145 314
- NL-A- 215 352
- Prospekt "Rau Rototiller B31/3-20dt VI/5dtVA-6.83"
- Prospekt "Landsberg Saatbettkombinationen"
- Prospekt "REMY ET FILS"

## Beschreibung

Die Erfindung bezieht sich auf einen Ackerstriegel mit einem Gestell, an dem Striegelzinken befestigt sind und das einen Dreipunktturm für die Verbindung des Gerätes mit einem Schlepper-Dreipunktgestänge aufweist.

Geräte dieser Art werden in der Landwirtschaft zur Unkrautbekämpfung benutzt, wobei die Striegelzinken das Unkraut ausreißen, das dann vertrocknen soll. Zur Unkrautbekämpfung werden auch Geräte mit Hackscharen verwendet. Hackschare werden in geringer Tiefe durch den Boden gezogen und sollen die Wurzeln der Unkräuter abschneiden. Dabei kann es vorkommen, daß noch so viele Wurzeln in so große Erdbrocken eingebettet bleiben, daß das Unkraut weiter wächst, insbesondere dann, wenn bei feuchtem Wetter ein Austrocknen der Erdbrocken nicht stattfindet. Man hat deshalb auch schon Hackschare mit Ackerstriegeln kombiniert, wobei die Ackerstriegel als Zusatzgeräte ausgebildet sind (AT-PS 251 329, DE-GM 1 876 282). Mit so ausgebildeten Geräten werden die von den Hackscharen abgelösten Schollen durch die Striegelzinken zerkleinert, wodurch die Wurzeln der Unkräuter freigelegt werden und dann nicht mehr anwachsen können.

Die bekannten Geräte sind in erster Linie Hackgeräte. Die als Zusatz vorgesehenen Ackerstriegel können nicht für sich benutzt werden.

Der Erfindung liegt die Aufgabe zugrunde, ein Gerät zu schaffen, das als selbständiger Ackerstriegel verwendbar ist, wobei jedoch die Pflegearbeit dadurch verbessert werden können soll, daß im Bedarfsfall auch Hackschare eingesetzt werden können.

Diese Aufgabe wird mit den Merkmalen des Anspruches 1 gelöst.

Ein so ausgebildetes Gerät ist primär ein reiner Ackerstriegel, der unmittelbar an einen Schlepper angebaut (werden kann), mit dem Ackerstriegel können alle üblichen Pflegearbeiten ausgeführt werden, für die Ackerstriegel geeignet sind. Insbesondere eignet sich das Gerät für die Pflege von Getreidefeldern, die über ihre gesamte Fläche von Striegelzinken bestrichen werden können, da die Getreidepflanzen fester im Boden sitzen als Unkräuter und durch die Striegelzinken nicht ausgerissen werden. Insbesondere für die Pflege von Reihenkulturen kann das Gerät mit dem Zusatz-Geräteteil ausgerüstet werden, so daß Unkrautwurzeln durch Hackschare abgeschnitten werden können. Hierbei entstehende Erdschollen werden von den Striegelzinken zerkleinert, wodurch die Gefahr vermieden wird, daß abgelöstes Unkraut wieder anwächst. Durch die Erfindung wurde ein universell verwendbares Gerät geschaffen, mit dem sowohl reine Striegelarbeiten als auch kombinierte Arbeiten ausgeführt werden können. Die Anschaffungskosten eines solchen Kombinationsgerätes sind wesentlich niedriger als die Anschaffungskosten für einen allein verwendbaren Ackerstriegel und ein Hackgerät.

Der Dreipunktturm kann an einem Vorbau des Gestells angeordnet sein (Anspruch 2). In diesem Fall kann das Zusatz-Geräteteil besonders einfach ausgebildet werden, da es seinerseits einen Dreipunktturm nicht benötigt. Wenn der Dreipunktturm in verschiedenen Stellungen montierbar ist, wie dies vorzugsweise der Fall sein soll, kann der Dreipunktturm auch dann in eine optimale Lage gebracht werden, wenn der Striegelteil alleine benutzt wird, d. h. der Striegelteil kann nahe an den Schlepper herangedrückt werden. Verschiedene Montagemöglichkeiten für den Dreipunktturm sind an sich bekannt zwecks Anpassung von Geräten an verschiedene Schlepper.

Die Befestigung des Zusatz-Geräteteiles kann durch Zusammenstecken erfolgen. Das Zusatz-Geräteteil kann, sozusagen als Gestell, einen einteiligen oder mehrteiligen Balken aufweisen der als Hohlprofil ausgebildet sein kann. Bei einem so ausgebildeten Gerät ist der Bauaufwand besonders gering.

Die Hackschare sind vorzugsweise durch Klemmen mit dem Balken verbunden, wobei zum Festklemmen U-förmige Bügel verwendet werden können.

Das Gerät hat vorzugsweise Laufräder zur Tiefenführung. Die Laufräder können umsteckbar ausgebildet sein. Dies ermöglicht es, bei jeder Benutzungsart des Gerätes die Tiefenführungsräder in eine optimale Lage zu bringen, insbesondere in eine Lage, in der sie den Werkzeugen nicht hinderlich im Wege sind. Die Höhenverstellbarkeit der Hackschare relativ zum Gestell in Verbindung mit höhenverstellbaren Laufrädern ermöglicht auch eine Einstellung der Be lastung des Striegelteiles, so daß die Anpreßkraft der Striegelzinken an den Boden verändert werden kann.

Das Gestell kann einen Mittelteil und einklappbare Seitenteile aufweisen. Hierbei können auch an den einklappbaren Seitenteilen Räder zur Tiefenführung angeordnet werden, wodurch die Tiefenführung wesentlich verbessert wird. Die Klappgelenke sind vorzugsweise gegenüber den seitlichen Enden des Mittelteiles nach innen versetzt um seitlich über das Gerät vorragende Werkzeuge zu vermeiden. Bei einem Gerät mit einklappbaren Seitenteilen besteht vorzugsweise auch der Zusatz-Geräteteil aus mehreren Teilen, um das Einklappen auch bei eingebautem Zusatz-Geräteteil zu ermöglichen. An den einzelnen Teilen des Striegelteiles zu befestigende Teile des Zusatz-Geräteteiles können ihrerseits aus mehreren Einzelteilen, z. B. Balkenstücken, bestehen. In diesem Fall haben die einzelnen zu befestigenden Teile nur geringe Gewichte und lassen sich deshalb leicht handhaben.

Die Striegelzinken sind vorteilhafterweise in eine Ruhestellung nach oben ausschwenkbar. Hierbei können Klappkonstruktionen angewendet werden, wie sie in der DE-PS 1 285 237 und der DE-OS 15 57 819 beschrieben sind. Die Ausschwenkbarkeit der Zinken hat den Vorteil, daß bei der Pflege von Reihenkulturen eine Striegelung der Oberfläche im Bereich der Pflanzenreihen vermieden werden kann. Diese Bearbeitungsmethode ist an sich bekannt und soll vorzugsweise auch mit dem erfindungsgemäßen Gerät möglich sein.

Die Hackschare des Zusatz-Geräteteiles sind vorzugsweise in vertikaler Richtung nachgebend befestigt. Dies kann sowohl durch federnd ausgebildete Stiele als auch durch andere Mittel, wie z. B. Gelenkvierecke erreicht werden. Höhenbewegliche Hackschare gestatten auch eine Tiefenführung mittels einer Tiefenführungs rolle. Eine Tiefenführung einzelner Schare oder von Schargruppen ist vor allem bei der Bearbeitung von unebenen Ackerflächen vorteilhaft. Höhenbeweglichen Hackscharen sind vorzugsweise Anschläge für die Begrenzung der tiefsten Stellung zugeordnet.

Gemäß einer weiteren Ausgestaltung der Erfindung sind Führungsseche vorgesehen. Diese erleichtern die Führung des Gerätes genau parallel zu Pflanzreihen, weshalb diese Weiterbildung besonders bei Einsatz des Gerätes für die Pflege von Reihenkulturen vorteilhaft ist. Die Führungsseche greifen zweckmäßigerweise in Boden ein, der durch Schlepperspuren oder Spuren von Laufrädern festgedrückt ist. Dadurch wird die Führungswirkung im Vergleich mit einem Eingreifen in lockeren Boden wesentlich verbessert.

Den Hackscharen können auch seitliche Schutzschilde zugeordnet sein. Man vermeidet dadurch, daß von den Hackscharen gelöste Erde auf die Pflanzenreihen fällt.

Gemäß einer weiteren Ausgestaltung der Erfindung ist auf dem Gestell ein Bandspritzgerät und/oder ein Reihendüngerstreuer angeordnet. Damit läßt sich die Unkrautbekämpfung weiterhin verbessern, indem auf diejenigen Streifen, nämlich die Pflanzenreihen, die von den Hackscharen und den Striegelzinken nicht bearbeitet werden können, ein Spritzmittel oder ein Streumittel gezielt, also nur im Bereich des nicht mechanisch bearbeitbaren Bandes, aufgebracht wird, so daß auch dort keine Unkräuter aufkommen können. Ziel der Erfindung jedoch ist die Schaffung eines Gerätes, mit dem eine optimale mechanische Unkrautbekämpfung möglich ist. Spritzmittel sollen eventuell nur örtlich dort eingesetzt werden, wo die mechanische Unkrautentfernung nicht möglich ist. Wenn sowohl ein Bandspritzgerät als auch ein Reihendüngerstreuer vorgesehen ist, können diese beiden Zusatzgeräte gemeinsam oder auch je für sich alleine betrieben werden. Das reihenweise Streuen des Düngers gestartet eine sparsame Verwendung, das auch aus ökologischen Gründen wünschenswert ist.

In der Zeichnung sind Ausführungsbeispiele der Erfindung dargestellt. Es zeigen:
- Fig. 1: eine Draufsicht auf einen Ackerstriegel, der mit Hackscharen kombiniert ist entsprechend dem Pfeil I in Fig. 2,
- Fig. 2: eine Seitenansicht des Gerätes in Richtung des Pfeiles II in Fig. 1 in einem gegenüber Fig. I etwas vergrößerten Maßstab,
- Fig. 3: eine Seitenansicht eines Hackschares und seiner Aufhängung mittels eines Gelenkviereckes, wobei dem Hackschar ein Schutzschild zugeordnet ist und
- Fig. 4: eine der Fig. 3 entsprechende Seitenansicht eines Hackschares, dem eine Tiefenführungsrolle zugeordnet ist.

Das zusammengesetzte Gerät besteht aus einem insgesamt mit S bezeichneten Striegelteil und einem insgesamt mit H bezeichneten Hackteil. Das Gerät wird jedoch insgesamt als Ackerstriegel bezeichnet, da der Striegelteil auch selbständig, d. h. ohne den Hackteil H verwendet werden kann.

Der Striegelteil S hat einen Mittelteil 1 und Seitenteile 2, 3, die relativ zum Mittelteil 1 um Achsen 4, 5 schwenkbar sind. Der Mittelteil 1 hat ein rahmenartiges Gestell mit langen Balken 6, 7 und kürzeren Querbalken (Traversen) 8, 9, 10, 11. An den Traversen 8 bis 11 sind Flacheisenstäbe 12 angeschweißt, an denen Striegelzinken 13 befestigt sind.

An den Oberseiten der Balken 6, 7 befinden sich Gelenke 14 bis 17 für die Anlenkung der Seitenteile 2, 3 um die genannten Achsen 4, 5. Um die Gelenke 14 bis 17 sind Balkenstücke 18 verschwenkbar, die mit Balkenstücken 19 der Seitenteile 2, 3 verschweißt sind. Die Balkenstücke 19 liegen bei ausgeklappten Seitenteilen 2, 3 auf gleicher Höhe mit den langen Balken 6, 7. Die beiden Balkenstücke 19 jedes Seitenteiles 2, 3 sind durch Traversen 20, 21 verbunden, die aus Flachmaterial bestehen, während die Traversen 8 bis 11 des Mittelsteiles 1 Hohlprofile sind. An den Traversen 20, 21 sind wieder Flacheisen 12a angeschweißt, die mit den Flacheisen 12 des Mittelteiles fluchten und an denen ebenfalls Striegelzinken 13 befestigt sind.

Die Gelenke 14 bis 17 haben Abstände von den Enden 7a, 7b bzw. 6a, 6b der Balken 7 bzw. 6. Dadurch erreicht man, daß bei senkrecht gestellten Seitenteilen 2, 3 die Werkzeuge nicht seitlich über den Mittelteil 1 vorragen.

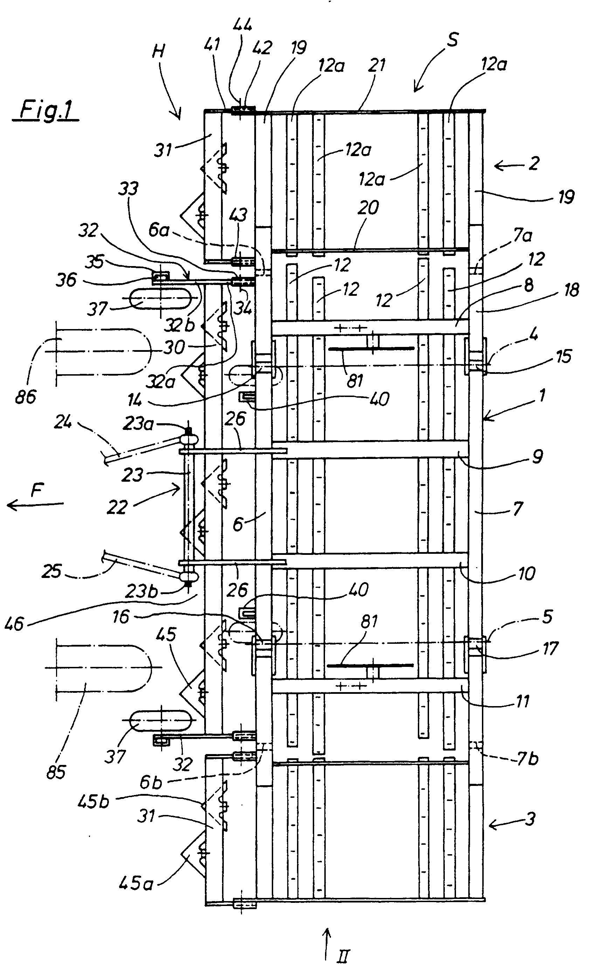

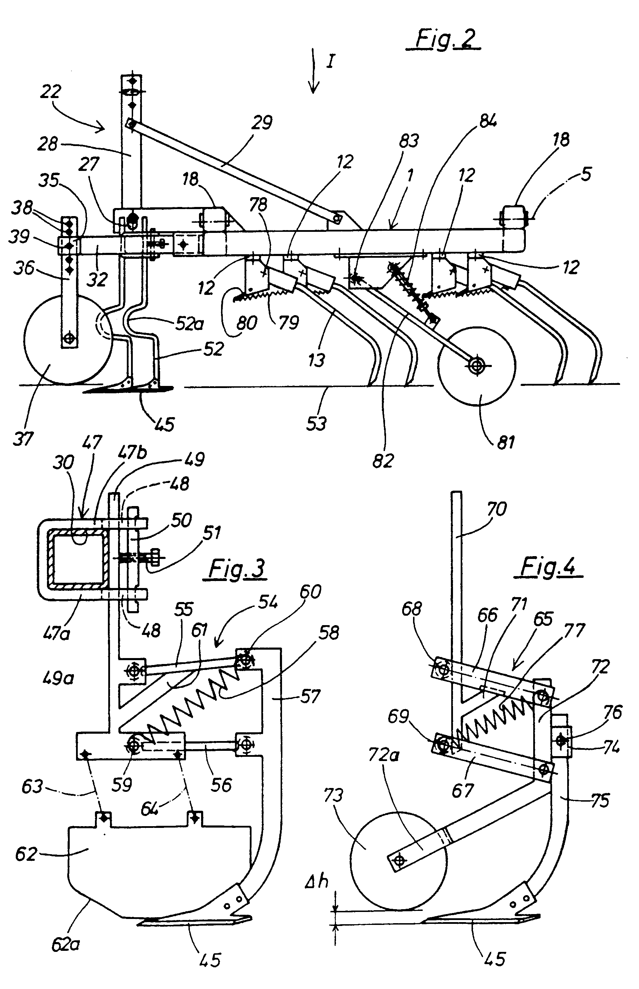

Am Mittelteil 1 ist ein insgesamt mit 22 bezeichneter Dreipunktturm angeordnet, der gegenüber dem langen Balken 6 verhältnismäßig weit nach links versetzt ist. Eine Querachse 23, an deren Enden sich Zapfen 23a, 23b für die Anlenkung von Unterlenkern 24, 25 eines Schlepper-Dreipunktgestänges befinden, ist in horizontalen Tragbalken 26 gehalten, die am Balken 6 und den Traversen 9, 10 festgeschweißt sind. An den vorderen Enden der Tragbalken 26 befinden sich vertikale Langlöcher 27 (siehe Fig. 2), durch die die Querachse 23 hindurchgreift. Die Langlöcher 27 lassen gewisse Pendelbewegungen des Gerätes um die als feststehend zu betrachtende Querachse 23 zu. Mit der Querachse 23 ist ein Turm 28 verbunden, der mittels Streben 29 gegenüber dem Mittelteil 1 abgestrebt ist. Der Turm 28 und seine Abstrebung 29 sind in Fig. 1 zur Verbesserung der Übersichtlichkeit weggelassen.

Der Hackteil H des Gerätes hat einen am Mittelteil 1 befestigten langen Balken 30, der als Hohlprofil mit quadratischem Querschnitt ausgebildet ist (siehe Fig. 3) und zwei kürzere Balken 3l, die mit dem langen Balken 30 fluchten. An den Enden des langen Balkens 30 sind rechtwinklig zur Längsrichtung des Balkens verlaufende Flachprofile 32 angeschweißt, die beidseitig vom Balken abragen. Die nach hinten abragenden profilteile 32a sind in Taschen 33 eingesteckt, die sich am vorderen langen Balken 6 des Mittelteiles 1 befinden. Zur Arretierung dienen Verriegelungsbolzen 34, die durch Löcher in den Taschen und den Profilen 32 hindurchgesteckt sind. Die Bolzen 34 sind nur durch Striche symbolisiert.

An den vorderen Teilen 32b der Profile 32 befinden sich Taschen 35, durch die ein als senkrechter Stiel ausgebildeter Radträger 36 hindurchgesteckt ist. An jedem Radträger 36 ist ein Laufrad 37 drehbar gelagert, das als Tiefenführungsrad für das gesamte Gerät dient. Wie Fig. 2 zeigt, befindet sich im Radträger 36 eine vertikale Reihe aus Löchern 38, die wahlweise mit Löchern 39 in der Tasche 35 zur Deckung gebracht werden können. Die so eingestellte Höhenlage wird mittels eines Bolzens gesichert, der durch die Löcher in der Tasche und dem Radträger hindurchgesteckt wird.

Etwas innerhalb der Gelenke 14, 16 sind an den langen Balken 6 des Mittelteiles 1 Taschen 40 angeschweißt, durch die die Radträger 36 ebenfalls hindurchsteckbar sind. Diese Taschen werden dann benutzt, wenn der Hackteil H nicht montiert ist.

An den Enden der kürzeren Balken 31 sind Profile 41 angeschweißt, die in Taschen 42, 43 einsteckbar sind, die sich an den Seitenteilen 2, 3 des Striegelteiles S befinden. Auch hier ist die Einsteckstellung mittels Verriegelungsbolzen 44 arretierbar.

An den Balken 30, 31 sind Hackschare 45 befestigt. Wie man aus der Draufsicht nach Fig. 1 ersehen kann, sind die Hackschare paarweise angeordnet, wobei jedes Paar ein vorderes Hackschar 45a und ein diesem gegenüber etwas zurückgesetztes hinteres Hackschar 45b aufweist. Zwischen den Paaren befinden sich Zwischenräume 46, die die Aussparung von Pflanzenreihen ermöglichen. Die Hackschare 45 sind sogenannte Gänsefußschare mit keilförmig angeordneten Schneiden, wie aus Fig. 1 deutlich zu ersehen ist.

Die Hackschare sind durch Klemmung an den Balken 30, 31 mit einer Klemmeinrichtung befestigt, die nachfolgend anhand der Fig. 3 betrachtet werden soll. Jede Klemmvorrichtung hat einen U-förmigen Bügel 47 mit Schenkeln 47a, 47b. In den Schenkeln befinden sich Schlitze 48, durch die ein Stiel 49 hindurchgreift, an dem unmittelbar (Fig. 2) oder mittelbar (Fig. 3, 4) ein Hackschar 45 befestigt ist. In die Schlitze 48 greift außerdem eine Traverse 50 ein, in der eine Druckschraube 51 verschraubbar ist, die mit ihrem vorderen Ende auf den Stiel 49 drückt. Bei dieser Art Klemmbefestigung kann der Stiel 49 stufenlos in jede gewünschte Höhenlage eingestellt und in dieser festgeklemmt werden.

Bei einer einfachen Ausführungsform der Erfindung, die in Fig. 2 dargestellt ist, sind die Hackschare 45 an elastischen Stielen 52 befestigt, wie dies an sich bekannt ist. Die Stiele 52 haben bei dem gezeichneten Ausführungsbeispiel horizontal vorragende Ausbauchungen 52a, die eine Nachgiebigkeit der Hackschare 45 in vertikaler Richtung ermöglichen, wobei bei einem Anheben der Hackschare die Ausbauchungen nach oben zusammengedrückt werden. Die Stiele 52 können aus Federstahl bestehen. Diese einfache Ausführung ist vor allem dann geeignet, wenn der zu bearbeitende Boden 53 einigermaßen eben ist und die Arbeitstiefe der Hackschare 45 in gewissen Grenzen schwanken kann.

Die Hackschare können auch (siehe Fig. 3) mittels eines Gelenkviereckes 54 aufgehängt sein. Das Gelenkviereck hat am Stiel 49 angelenkte Glieder 55, 56, die mit ihren rechten Enden an einem Grindel 57 angelenkt sind, der das Hackschar 45 trägt. Diagonal über das Gelenkviereck 54 erstreckt sich eine Zugfeder 58, die bei den Gelenken 59, 60 eingehängt ist. Am Stiel 49 befindet sich ein Anschlag 61, an dem das obere Glied 55 des Gelenkviereckes zur Anlage kommen kann.

Am unteren Ende des Stieles 49 befindet sich ein Querstück 49a, an dem ein Schutzschild 62 mittels parallelen Lenkern 63, 64 angelenkt ist. Das Querstück 49a, die Lenker 63, 64 und der Schild 62 bilden zusammen ein Parallelogramm, so daß der Schild 62 parallel zu sich selber nach oben verlagert werden kann.

Wie eine Betrachtung der Fig. 3 zeigt, bewirkt die Feder 58, daß der obere Lenker 55 mit einer gewissen Kraft am Anschlag 61 anliegt. Wenn das Schar 45 auf ein Hindernis stößt, kann es nach oben ausweichen, wobei der Lenker 55 vom Anschlag 61 abgehoben wird. Die Feder 58 bewirkt ein Zurückschwenken in die gezeichnete Arbeitsstellung, wenn das Hindernis überwunden ist. Der Schild 62 kann Bodenunebenheiten folgen, da er auf dem Boden entlanggleitet, was durch eine vordore Anschrägung 62a erleichtert wird. Das Gelenkviereck 54 bei der Ausführungsform nach Fig. 3 bildet eine Steinsicherung, hat also eine ähnliche Wirkung wie die federnde Ausbildung der Stiele 52 nach Fig. 2. Mit der Ausführung nach Fig. 3 lassen sich jedoch ohne Schwierigkeiten auch große Ausweichwege erzielen, was min einer Ausführung nach Fig. 2 nicht ohne weiteres möglich ist, da ja die Stiele 52 eine gewisse Steifigkeit behalten müssen.

Bei der Ausführungsform nach Fig. 4 ist das Hackschar 45 ebenfalls mittels eines Gelenkviereckes 65 aufgehängt. Zwei parallele Lenker 60, 67 sind bei 68, 69 an einem Stiel 70 angelenkt. Der obere Lenker 66 wirkt mit einem am Stiel 70 befindlichen Anschlag 71 zusammen. Mit den Lenkern 66, 67 ist auch ein Radträger 72 verbunden, der an seinem unteren Ende eine Gabel 72a aufweist, in der eine Tiefenführungsrolle 73 drehbar gelagert ist. Am Radträger 72 befindet sich eine Tasche 74, durch die ein Grindel 75 hindurchgesteckt ist, an dessen unterem Ende sich das Hackschar 45 befindet. Der Grindel 75 ist innerhalb der Tasche 74 höhenverschiebbar und mittels einer Klemmschraube 76 in jeder Höhenlage festklemmbar.

Diagonal über das Gelenkviereck 65 erstreckt sich eine Zugfeder 77, die bestrebt ist, die Tiefenführungsrolle 73 an den Boden anzudrücken. Normalerweise liegt der obere Lenker 66 nicht am Anschlag 71 an. Die Anlage besteht nur dann, wenn das Gerät ausgehoben ist. Der Höhenunterschied 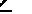 h zwischen der Unterseite der Tiefenführungsrolle 73 und den Schneiden des Hackschares 45 ist die Arbeitstiefe, mit der das Hackschar in den Boden eindringt. Die Eindringtiefe 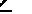 h kann durch Verschieben des Grindels 75 in der Tasche 74 verändert werden.

Die Ausführungsform nach Fig. 4 ist besonders dann zweckmäßig, wenn unebener Boden bearbeitet werden soll, da die Tiefenführungsrolle 73 für eine exakte Einhaltung der Arbeitstiefe sorgt. Eine Tiefenführungsrolle mit Gelenkviereck kann auch einer Gruppe von Hackscharen zugeordnet werden, insbesondere einer Gruppe, die einen Streifen zwischen zwei Pflanzenreihen bearbeitet. Beispielsweise könnte ein Paar aus Hackscharen 45a, 45b an einem Gelenkviereck aufgehängt sein.

Die Striegelzinken 13 sind um Gelenke 78 schwenkbar und werden mittels einer Zugfeder 79 im Eingriff mit dem Boden 53 gehalten. Das linke Ende der Feder 79 ist an einem schwenkbaren Bügel 80 eingehängt. Dieser dient zur Veränderung des von der Kraft der Feder 79 um das Gelenk 78 ausgeübten Momentes und auch zur Arretierung des Zinkens in einer ausgehobenen Ruhestellung. Diese Zinkenkonstruktion ist an sich bekannt und in der bereits erwähnten DE-PS 1 285 237 und der bereits erwähnten DE-OS 1 557 819 im Detail beschrieben.

Am Striegelteil S befinden sich auch Führungsseche 81. Die Führungsseche sind drehbar gelagerte Scheiben, die an Armen 82 drehbar gelagert sind. Die Arme 82 sind um Gelenke 83 schwenkbar. Die Arme 82 sind mittels federnder Streben 84 am Gestell 1 abgestützt. Wie die Draufsicht zeigt, sind die Führungsseche 81 in den Spuren angeordnet, die durch die Schlepper-Hinteräder 85, 86 gebildet werden. Dadurch wird erreicht, daß die Führungsseche in festgedrückten Boden eingreifen und so eine gute seitliche Führung des Gerätes bewirken.

Die Wirkungsweise des Gerätes ergibt sich im wesentlichen aus der vorstehenden Beschreibung. Während der Arbeit des Gerätes bewegt sich dieses in Richtung des Pfeiles F über den Boden. Das Gerät kann als reiner Ackerstriegel verwendet werden. In diesem Fall sind die Balken 30, 31 samt den an ihnen befindlichen Hackscharen 45 abgenommen. Die Laufräder 37 sind dann am Gestell 1 dadurch befestigt, daß ihre Radträger 36 durch die Taschen 40 hindurchgesteckt sind. Diese Montage der Laufräder 37 ist in Fig. 1 strichpunktiert eingezeichnet. Das Gerät wird in dieser Weise z. B. bei der Bearbeitung von Getreidefeldern benutzt.

Bei der Bearbeitung von Feldern mit Reihenkulturen, wie z. B. Maisfeldern, sind die Balken 30 und 31 mit ihren Hackscharen 45 an den Striegelteil S angebaut und die Laufräder 37 sind so montiert, wie gezeichnet. Bei der Bearbeitung von Reihenkulturen werden einige der Striegelzinken 13 in eine Ruhelage nach oben verschwenkt, damit das Gerät frei über die Pflanzen passieren kann. Angehoben werden Striegelzinken, die im Bereich hinter den Zwischenräumen 46 zwischen den Paaren aus Hackscharen 45a, 45b liegen.

Zum Transport des Gerätes werden die Seitenteile 2, 3 um die Gelenkachsen 4, 5 eingeklappt. Auch bei senkrechter Lage der Seitenteile ragen die Werkzeuge 45, 13, nicht über die seitlichen Enden des Mittelteiles 1 vor dank des Versatzes der Gelenke 14 bis 17 nach innen.

## Patentansprüche

1. Ackerstriegel mit einem Gestell, an dem Striegelzinken befestigt sind und das einen Dreipunktturm für die Verbindung des Gerätes mit einem Schlepper-Dreipunktgestänge aufweist, gekennzeichnet durch mindestens ein mit dem Gestell (1, 2) lösbar verbundenes Zusatz-Geräteteil (H), an dem Hackschare (45) angeordnet sind, und daß der Dreipunktturm (22) auch bei angebautem Zusatz-Geräteteil (H) für die Verbindung mit dem Schlepper bestimmt ist.

2. Ackerstriegel nach Anspruch 1, dadurch gekennzeichnet, daß der Dreipunktturm (22) an einem Vorbau (26) des Gestells (1) angeordnet ist und vorzugsweise in mindestens zwei verschiedenen Stellungen montierbar ist, die verschiedene Abstände von dem Gestell haben.

3. Ackerstriegel nach einem der vorhergehenden Ansprüche, dadurch gekennzeichnet, daß an der Vorderseite des Gestells (1, 2, 3) Taschen (33, 42) angeordnet sind, in die Ansätze (32a, 41) des eventuell aus mehreren Teilen bestehenden Zusatz-Geräteteiles (H) eingesteckt sind.

4. Ackerstriegel nach Anspruch 3, gekennzeichnet durch Sicherungsbolzen (34, 44), die durch die Taschen (33, 42) und die Ansätze (32a, 41) des Zusatz-Geräteteiles (H) hindurchgesteckt sind.

5. Ackerstriegel nach einem der vorhergehenden Ansprüche, dadurch gekennzeichnet, daß das Zusatz-Geräteteil (H) mindestens einen Balken (30, 31) aufweist, der sich quer zur Bewegungsrichtung (F) des Gerätes (H, S) erstreckt und an dem die Hackschare (45) befestigt sind, vorzugsweise durch Klemmung.

6. Ackerstriegel nach Anspruch 5, dadurch gekennzeichnet, daß der Balken (30, 31) ein Hohlprofil ist, das vorzugsweise einen quadratischen Querschnitt aufweist.

7. Ackerstriegel nach einem der Ansprüche 5 und 6, dadurch gekennzeichnet, daß die Hackschare (45) Befestigungsstiele (52; 49; 70) aufweisen, die in beliebigen Höhenlagen mittels Spannvorrichtungen (47, 50, 51) an die Balken (30,31) angepreßt sind.

8. Ackerstriegel nach Anspruch 7, dadurch gekennzeichnet, daß jede Spannvorrichtung einen den Balken (30, 31) umgreifenden U-förmigen Bügel (47), eine sich zwischen den Schenkeln (47a, 47b) des Bügels (47) erstreckende Traverse (50) und eine in der Traverse (50) verschraubbare und auf den Stiel (52; 49; 70) drückende Andrückschraube (51) aufweist.

9. Ackerstriegel nach einem der vorhergehenden Ansprüche, gekennzeichnet durch Laufräder (37), die zur Tiefenführung des Gerätes (H, S) dienen.

10. Ackerstriegel nach Anspruch 9, dadurch gekennzeichnet, daß die Laufräder (37) an Radträgern (36) gelagert sind, die wahlweise am Gestell (1) oder am Zusatz-Geräteteil (H) befestigbar sind.

11. Ackerstriegel nach Anspruch 10, dadurch gekennzeichnet, daß die Radträger (36) vertikale Stiele aufweisen, die in Taschen (40, 33) am Gestell (1) bzw. am Zusatz-Geräteteil (H) einsteckbar und vorzugsweise in verschiedenen Höhenlagen mittels Bolzen fixierbar sind, die die Taschen (33, 40) und die Stiele (36) durchgreifen.

12. Ackerstriegel nach einem der vorhergehenden Ansprüche, dadurch gekennzeichnet, daß das Gestell einen Mittelteil (1) und einklappbare Seitenteile (2, 3) aufweist.

13. Ackerstriegel nach Anspruch 12, dadurch gekennzeichnet, daß die Seitenteile (2, 3) um horizontale Achsen (4, 5) klappbar sind, die gegenüber den Enden (6a/7a, 6b/7b) des Mittelteiles (1) mindestens um die Länge der Werkzeuge (13, 45) nach innen versetzt sind.

14. Ackerstriegel nach einem der Ansprüche 12 und 13, dadurch gekennzeichnet, daß das Zusatz-Geräteteil (H) aus mehreren Balken (30, 31) besteht, wobei vorzugsweise ein Balken (30) am Mittelteil und weitere Balken (31) an den Seitenteilen (2, 3) des Gestells (1, 2, 3) angeordnet sind.

15. Ackerstriegel nach einem der vorhergehenden Ansprüche, dadurch gekennzeichnet, daß die Striegelzinken (13) in eine Ruhestellung nach oben ausschwenkbar sind.

16. Ackerstriegel nach einem der vorhergehenden Ansprüche, dadurch gekennzeichnet, daß die Hackschare (45) des Zusatz-Geräteteiles (H) in vertikaler Richtung nachgebend befestigt sind.

17. Ackerstriegel nach Anspruch 16, dadurch gekennzeichnet, daß die Hackschare (45) an federnd ausgebildeten Stielen (52) befestigt sind, die vorzugsweise horizontal abragende Ausbauchungen (52a) aufweisen.

18. Ackerstriegel nach Anspruch 16, dadurch gekennzeichnet, daß die Hackschare (45) an einem Gelenkviereck (54; 65) aufgehängt sind, in dem eventuell diagonal eine Zugfeder (58; 77) angeordnet ist.

19. Ackerstriegel nach einem der Ansprüche 16 bis 18, dadurch gekennzeichnet, daß jedem Hackschar (45) oder einer Gruppe von Hackscharen eine Tiefenführungsrolle (73) zugeordnet ist, relativ zu der das Hackschar (45) bzw. die Hackschargruppe vorzugsweise höhenverstellbar ist (Fig. 4).

20. Ackerstriegel nach einem der Ansprüche 16 bis 19, dadurch gekennzeichnet, daß zur Begrenzung der tiefstmöglichen Stellung der Hackschare Anschläge (61; 71) vorgesehen sind, z.B. mit einem Glied (55; 66) des Gelenkviereckes (54; 65) zusammenwirkende Anschläge (61; 71).

21. Ackerstriegel nach einem der vorhergehenden Ansprüche, gekennzeichnet durch Führungsseche (81), vorzugsweise drehbar gelagerte Scheibenseche, die am Gestell (1) befestigt sind.

22. Ackerstriegel nach Anspruch 21, dadurch gekennzeichnet, daß die Führungsseche (81) in den Schlepperspuren oder den Spuren der Laufräder angeordnet sind.

23. Ackerstriegel nach einem der vorhergehenden Ansprüche, gekennzeichnet durch den Hackscharen (45) benachbarte höhenbewegliche Schilde (62) für die Abschirmung von Pflanzenreihen.

24. Ackerstriegel nach einem der vorhergehenden Ansprüche, dadurch gekennzeichnet, daß auf dem Gestell ein Bandspritzgerät und/oder ein Reihendüngerstreuer angeordnet ist.

## Claims

1. Arable land cleaning unit with a frame on which are fixed combing tines and which comprises a three-point tower for connecting the implement to a three-point linkage of a tractor, characterised by at least one supplementary implement component (H) which is detachably connected to the frame (1, 2), on which grubbing shares (45) are arranged and that the three-point tower is also intended, with an added supplementary implement part (H), for the connection to the tractor.

2. Arable land cleaning unit according to claim 1, characterised in that the three-point tower (22) is arranged on a front part (26) of the frame (1) and is advantageously being able to be mounted in at least two different positions, which are spaced at different distances from the frame.

3. Arable land cleaning unit according to one of the preceding claims, characterised in that the front side of the frame (1,2,3) has arranged thereon pockets (33, 42), into which are fitted parts (32a, 41) of the supplementary implement part (H), possibly consisting of several parts.

4. Arable land cleaning unit according to claim 3, characterised by securing bolts (34, 44), which are pushed through the pockets (33, 42) and the parts (32a, 41) of the added implement part (H).

5. Arable land cleaning unit according to one of the preceding claims, characterised in that the added implement part (H) comprises at least one beam (30, 31), which extends transversely of the direction of movement (F) of the implement (H, S) and on which the grubbing shares (45) are fixed, advantageously by clamping.

6. Arable land cleaning unit according to claim 5, characterised in that the beam (30, 31) is a hollow section member, which advantageously is of quadratic cross-section, 9.

7. Arable land cleaning unit according to one of the claims 5 and 6, characterised in that the grubbing shares (45) comprise fixing rods (52; 49; 70), which are pressed at arbitrary height positions and by means of clamping devices (47, 50, 51) on to the beams (30, 31).

8. Arable land cleaning unit according to claim 7, characterised in that each clamping device comprises a U-shaped member (47) which engages around the beam (30, 31), a cross member (50) which extends between the legs (47a, 47b) of the stirrup member (47) and a pressure screw (51) which can be screwed into the cross member (50) and applies pressure to the rod (52; 49; 70).

9. Arable land cleaning unit according to one of the preceding claims, characterised by land wheels (37), which serve for the depth guiding of the implement (H, S).

10. Arable land cleaning unit according to claim 9, characterised in that the land wheels (37) are mounted on wheel supports (36), which are optionally able to be fixed on the frame (1) or on the supplementary implement part (H).

11. Arable land cleaning unit according to claim 10, characterised in that the wheel supports (36) comprise vertical rods, which can be fitted into pockets (40, 33) on the frame (1) or on the supplementary implement part (H) and advantageously can be fixed in different height positions by means of bolts, which pass through the pockets (33, 40) and the rods (36).

12. Arable land cleaning unit according to one of the preceding claims, characterised in that the frame comprises a middle section (1) and retractable side members (2, 3).

13. Arable land cleaning unit according to claim 12, characterised in that the side members (2, 3) are hingeable about horizontal shafts (4, 5), which are offset inwardlly relatively to the ends (6a/7a, 6b/7b) of the middle part (1), at least by the length of the tools (13, 45).

14. Arable land cleaning unit according to one of the claims 12 and 13, characterised in that the additional part (H) of the implement consists of several beams (30, 31), one beam (30) advantageously being arranged on the middle section and other beams (31) on the side members (2, 3) of the frame (1, 2, 3).

15. Arable land cleaning unit according to one of the preceding claims, characterised in that the cleaning combs or tines (13) are able to be swung upwardly into a rest position.

16. Arable land cleaning unit according to one of the preceding claims, characterised in that the grubbing shares (45) of the supplementary part (H) of the unit are secured so as to be yieldable in a vertical direction.

17. Arable land cleaning unit according to claim 16, characterised in that the grubbing shares (45) are fixed on resiliently formed rods (52), which advantageously comprise horizontally extending convex portions (52a).

18. Arable land cleaning unit according to claim 16, characterised in that the grubbing shares (45) are suspended from a four-bar linkage (54; 65), in which a tension spring (58; 77) is arranged, possibly diagonally.

19. Arable land cleaning unit according to one of the claims 16 to 18, characterised in that a depth-controlling roller (73) is associated with each grubbing share (45) or with a group of grubbing shares, relatively to which the grubbing share (45) or the group of grubbing shares is advantageously adjustable as regards height (Fig. 4).

20. Arable land cleaning unit according to one of the claims 16 to 19, characterised in that, for limiting the lowest possible position of the grubbing shares, stops (61, 71) are provided, for example, stops (61, 71) which coact with a member (55; 66) of the four-bar linkage (54; 65).

21. Arable land cleaning unit according to one of the preceding claims, characterised by guide coulters (81), advantageously rotatably mounted disc-type coulters, which are fixed on the frame (1).

22. Arable land cleaning unit according to claim 21, characterised in that the guide coulters (81) are arranged in the tractor tracks or the tracks of the running wheels.

23. Arable land cleaning unit according to one of the preceding claims, characterised by height-adjustable shields (62) adjacent the grubbing shares (45) and for shielding rows of plants.

24. Arable land cleaning unit according to one of the preceding claims, characterised in that the frame has arranged thereon a strip-type spraying unit and/or a row fertiliser spreader.

## Revendications

1. Etrille agricole comportant un bâti sur lequel sont fixées des fourches d'étrille et qui présente une tourelle à trois points en vue de la liaison du dispositif à un attelage à trois points d'un tracteur, caractérisée par au moins un ensemble additionnel de dispositifs (H) relié de façon détachable au bâti (1, 2), et sur lequel sont disposées des rasettes (45), et en ce que la tourelle à trois points (22) est également destinée à la liaison avec le tracteur, quand l'ensemble additionnel de dispositifs (H) est présent.

2. Etrille agricole selon la revendication 1, caractérisée en ce que la tourelle à trois points (22) est disposée sur une avancée (26) du bâti (1) et peut de préférence être montée en au moins deux positions différentes qui sont à des distances différentes par rapport au bâti.

3. Etrille agricole selon l'une des revendications précédentes, caractérisée en ce que des goussets (33, 42), dans lesquels sont enfoncés des appendices (32a, 41) de l'ensemble additionnel de dispositifs (H) composé éventuellement de plusieurs parties, sont disposés sur la face avant du bâti (1, 2, 3).

4. Etrille agricole selon la revendication 3, caractérisée par des goupilles de sécurité (34, 44), qui sont enfoncées à travers les goussets (33, 42) et les appendices (32a, 41) de l'ensemble additionnel de dispositifs (H).

5. Etrille agricole selon l'une des revendications précédentes, caractérisée en ce que l'ensemble additionnel de dispositifs (H) comporte au moins une poutre (30, 31) qui s'étend transversalement à la direction de déplacement (F) du dispositif (H, S) et sur laquelle sont fixées les rasettes (45), de préférence par serrage.

6. Etrille agricole selon la revendication 5, caractérisée en ce que la poutre (30, 31) présente un profil creux, qui est de préférence de section transversale carrée.

7. Etrille agricole selon l'une des revendications 5 et 6, caractérisée en ce que les rasettes (45) sont pourvues de tiges de fixation (52; 49; 70) qui sont pressées sur les poutres (30, 31) à des hauteurs souhaitées, au moyen de dispositifs de serrage (47, 50, 51).

8. Etrille agricole selon la revendication 7, caractérisée en ce que chaque dispositif de serrage comprend un étrier en forme de U (47) entourant la poutre (30, 31), une traverse (50) s'étendant entre les branches (47a, 47b) de l'étrier (47) et une vis de pression (51) qui peut se visser dans la traverse (50) et appuyer sur la tige de fixation (52; 49; 70).

9. Etrille agricole selon l'une des revendications précédentes, caractérisée par des roues porteuses (37), qui servent au guidage en profondeur des dispositifs (H, S).

10. Etrille agricole selon la revendication 9, caractérisée en ce que les roues porteuses (37) sont montées sur des supports de roue (36) qui peuvent être fixés à volonté sur le bâti ou sur l'ensemble additionnel de dispositifs (H).

11. Etrille agricole selon la revendication 10, caractérisée en ce que les supports de roue (36) comportent des montants verticaux qui peuvent être enfoncés dans des goussets (40, 33) prévus sur le bâti (1) ou sur l'ensemble additionnel de dispositifs (H), et qui peuvent de préférence être réglés à différentes hauteurs au moyen de goupilles qui pénètrent dans les goussets (33, 40) et les montants (36).

12. Etrille agricole selon l'une des revendications précédentes, caractérisée en ce que le bâti comporte une pièce centrale (1) et des pièces latérales escamotables (2, 3).

13. Etrille agricole selon la revendication 12, caractérisée en ce que les pièces latérales (2, 3) sont repliables autour d'axes horizontaux (4, 5), qui sont décalés vers l'intérieur d'au moins la longueur des outils (13, 45) par rapport aux extrémités (6a, 7a; 6b, 7b) de la partie centrale (1).

14. Etrille agricole selon l'une des revendications 12 et 13 , caractérisée en ce que l'ensemble additionnel de dispositifs (H) se compose de plusieurs poutres (30, 31), une poutre étant de préférence disposée sur la partie centrale et d'autres poutres (31) sur les parties latérales (2, 3) du bâti (1, 2, 3).

15. Etrille agricole selon l'une des revendications précédentes, caractérisée en ce que les dents d'étrille (13) peuvent être tournées vers le haut dans une position de repos.

16. Etrille agricole selon l'une des revendications précédentes, caractérisée en ce que les rasettes (45) de l'ensemble additionnel de dispositifs (H) sont fixées de façon élastique en direction verticale.

17. Etrille agricole selon la revendication 16, caractérisée en ce que les rasettes (45) sont fixées sur des montants (52) réalisés de manière élastique, qui présentent de préférence des parties incurvées en saillie horizontalement.

18. Etrille agricole selon la revendication 16, caractérisée en ce que les rasettes (45) sont suspendues à un quadrilatère articulé (54; 65) dans lequel est éventuellement monté en diagonale un ressort de traction (58; 77).

19. Etrille agricole selon l'une des revendications 16 à 18, caractérisée en ce qu'un galet de guidage de profondeur (73) est associé à chaque rasette (55) ou à un groupe de rasettes, la rasette (55) ou le groupe de rasettes étant de préférence réglable en hauteur par rapport à ce galet (73).

20. Etrille agricole selon l'une des revendications 16 à 19, caractérisée en ce que sont prévues, pour limiter la position la plus profonde possible des rasettes, des butées (61; 71) par exemple des butées coopérant avec un organe (55; 66) du quadrilatère articulé (54; 65).

21. Etrille agricole selon l'une des revendications précédentes, caractérisée par des coutres de guidage (81), de préférence des coutres à disques montés à rotation, qui sont fixés sur le bâti (1).

22. Etrille agricole selon la revendication 21, caractérisée en ce que les coutres de guidage (81) sont disposés dans les traces de tracteur ou dans les traces des roues porteuses.

23. Etrille agricole selon l'une des revendications précédentes, caractérisée par des écrans (62) mobiles en hauteur, voisins des rasettes (45), destinés à la protection de rangées de plantes.

24. Etrille agricole selon l'une des revendications précédentes, caractérisée en ce qu'un dispositif de pulvérisation en bande ou un épandeur d'engrais en rangée est disposé sur le bâti.
